# EUROPEAN PATENT APPLICATION

(11) **EP 0 984 598 A2**
(43) Date of publication of application: **08.03.2000**
(21) Application number: 99116984.8
(22) Date of filing: 27.08.1999
(51) Int. Cl.: H04L 29/06, H04L 12/22

(54) **Information authentication system**

(30) Priority: 31.08.1998 JP 24471998
(71) Applicant: Hitachi, Ltd., Chiyoda-ku, Tokyo 101-8010 (JP)
(72) Inventor: Susaki, Seiichi, Yokohama-shi (JP); Toyoshima, Hisashi, Hachioji-shi (JP); Nagano, Hiromi, Tokyo (JP); Kaji, Tadashi, Fujisawa-shi (JP); Toyoda, Hideki, Yokohama-shi (JP)
(74) Representative: Strehl Schübel-Hopf & Partner

(57) **Abstract**

An information authentication system in which authenticity of multimedia data (400) generated by a first user (110) can be visually and auditorily confirmed by a second user (130) includes an information generator terminal (140₁) including a unit to generate by an application program original data to be sent to an information browser, a generator mark generator to guarantee authenticity of the original data, a unit to combine the original data with a generator mark (406) to generate generator signature data (407), and a unit to transmit the generator signature data to the information browser, and an information browser terminal having received the generator signature data includes a unit to separate the original data and the generator mark from the generator signature data, a unit to verify whether or not the generator mark is actually generated by the information generator.

## Description

### BACKGROUND OF THE INVENTION

The present invention relates to an authentication system in an information system in which various kinds of multimedia data generated by a first user is acquired and is browsed by a second user and the second user can confirm authenticity of the multimedia data.

With development of information apparatuses such as personal computers and installation of communication networks, various information has been electronically represented for communication via the networks. Although any user can easily conduct such an information communication via the networks at a high speed with a faraway partner, there exists on the other hand a fear that ① data communicated is stolen by a third person, ② data communicated is forgotten by a third person, and ③ the communication partner uses another's name.

To protect the information system against such a fear, there have been heretofore broadly employed security technologies such as encryption and authentication. Specifically, the data communicated is encrypted for the first problem. Moreover, for the second and third problems, a digital signature is put to the data communicated.

An outline of the digital signature technology is described, for example, in pages 14 to 16 of the "Cryptography and Data Security" written by Dorothy Elizabeth Robling Denning and publish from Addison-Wesley Publishing Company.

The digital signature is a technology using asymmetry of an encryption key in a public key cryptography method.

A method to put a digital signature to certain data and a method to verify the data with the digital signature are as follows.

A first user having generated data first generates a cryptogram (digital signature) by encrypting the generated data with his or her private key (an encryption key of which a correct value is known to the first user). Next, the original data is paired with the digital signature to be passed to a second user. The second user decrypts the digital signature using a public key (an encryption key having a one-to-one correspondence with the private key and its correct value is opened to all users including the second user) of the first user to compare a result of the decoding with the original data. When the result matches with the original data, it is assumed that the data is actually generated by the first user and the data is not forgotten.

This is because that data generated by a third person who intends to conduct an illegal act or data forgotten by the third person does not match the result obtained by decoding the digital signature using the public key of the first user. In other words, that the result obtained by decoding the digital signature using the public key of the first user matches the original data indicates that a private key of the first user corresponding to the public key was actually used when the digital signature was generated, and only the first user herself or himself can use the private key of the first user.

As above, by using the digital signature technology, the data generator can prove for a third person that the pertinent data has been actually generated by the data generator and the data has not been forgotten (these characteristics are comprehensively called authenticity in the present invention). However, the digital signature itself is merely numeric data and the contents thereof cannot be easily interpreted by directly reading the signature.

On the other hand, when humans watch a thing, most of them implicitly perceive meanings indicated by the thing. For example, when they browse a Web page of a store opened on the Internet using a browser program, it can be easily estimated that most of them consider that the store is a member of the credit card company and they can pay with a credit card of the company if a logo mark of a credit card company is fixed onto the Web page. Additionally, if image data of a sign or a print of a seal is attached to an electronic document generated by a word processor or the like, it can be considered that a person who is an object of the sign or the print of a seal have generated the data or have approved the contents of the data.

However, the logo mark, the sign, and the print of a seal are only image data and have no characteristic of evidence (guaranteeing that the data matches the contents represented by the attached image data). This is because that it is easy not only for the first data generator but also for any person to copy the image data attached to first information (a Web page, an electronic document, or the like) onto second information.

In this situation, there has been devised a digital signature system to achieve a control operation such that when a digital signature is correctly verified, image data such as a sign or a print of a seal is displayed to keep the characteristic of evidence. The digital signature system is described in U.S. Patent No. 5,606,609 entitled "Electronic Document Verification System And Method".

Incidentally, in the information systems at present, to electronically achieve various processing, it is required to handle various kinds of multimedia data such as text data, word processor documents, Web pages, drawings, audio data, image data, and video data. However, these multimedia data have mutually different "tekisuto keishiki (Japanese for data formats)". For example, the text data is in a data format called "tekisuto keishiki" and the Web pages are in an HTML format. Moreover, the image data can be in several data formats called a bit map format, a JPEG format, a GIF format, etc. and the word processor documents have formats inherent to application programs (word processors) having processed the documents.

In the information systems of today, to appropriately process multimedia data having the different data formats above, there are employed various application programs. For example, an application program processes data in the text format and another application program processes data of a data format unique to the application program. Additionally, it may also be possible that further another application program processes data having several kinds of data formats, respectively.

In an environment in which multimedia data having various kinds of data formats are processed by separately using many application programs, there arise problems as follows if authenticity of data is to be guaranteed by the conventional digital signature technology.

To confirm authenticity of each multimedia data in the environment above, all application programs to be used are each required to have a function to generate and to verify a digital signature. However, at present, many application programs have not the digital signature function. Therefore, for example, when a digital signature is attached to multimedia data generated by an application program, the format of the new multimedia data thus generated with the signature becomes different from that of the original multimedia data and cannot be processed by the application program used to generate the multimedia data.

Furthermore, to add the digital signature function to existing application programs, cooperation of program developers (program developing firms) of the application programs is necessary, which is actually quite difficult.

Moreover, as described above, human beings have a tendency to implicitly perceive, when they watch a thing or auditorily recognize a thing, meanings indicated by the thing. Therefore, it is more practical if a verification result of the digital signature can be visually and auditorily confirmed in a direct fashion in addition to merely employ the digital signature technology.

### SUMMARY OF THE INVENTION

It is therefore an object of the present invention, which has been devised under the circumstances above, to provide an authentication method in an information system handling multimedia data having several different data formats such as text data, word processor documents, Web pages, drawings, audio data, image data, and video data. In the authentication method, authenticity of multimedia data generated by a first user can be visually and/or auditorily confirmed in a direct manner by a second user independently of the data formats and application programs to process the multimedia data. The object of the present invention further is to provide a system using the method, individual apparatuses to be used in the system, programs to operate the apparatuses, and a data structure suitable for the system.

In order to achieve the object above in accordance with the present invention, first multimedia data generated by a first user is combined with second multimedia data including a characteristic to be visually and auditorily confirmed and authenticity verifying means to generate third multimedia data, and the second user separates the first and second multimedia data from the third multimedia data and then visually and auditorily confirms by use of the characteristic to be visually and auditorily confirmed and the authenticity verifying means of the second multimedia data whether or not the first multimedia data is authentic and processes the first multimedia data by use of an appropriate application program.

In accordance with the present invention, an evidence whether or not the first multimedia data generated by the first user by use of an arbitrary application program, namely, the second multimedia data is first generated by a third person (organization) trusted by the first user or all users and thereafter the first multimedia data and second multimedia data are combined with each other to generate third multimedia data. Moreover, the second user separates the third multimedia data into the first and second multimedia data and then visually and auditorily confirms authenticity of the first multimedia data by use of the characteristic to be visually and auditorily confirmed and the authenticity verifying means of the second multimedia data. Additionally, the first multimedia data is processed by an application program, namely, an application program which is selected from application programs available for the second user and which can process a data format of the first multimedia data.

Consequently, in accordance with the present invention, the second user can correctly confirm authenticity of the first multimedia data visually and auditorily by use of the authenticity verifying means of the second multimedia data independently of the data format of the first multimedia data and the application program used by the first user to generate the first multimedia data.

### BRIEF DESCRIPTION OF THE DRAWINGS

The present invention will become more apparent from the following detailed description, when taken in conjunction with the accompanying drawings, in which:
Fig. 1 is a schematic diagram showing an outline of constitution of a first embodiment of an authentication system in accordance with the present information;
Fig. 2 is a block diagram showing a hardware configuration of a terminal of Fig. 1;
Fig. 3 is a flowchart for explaining an operation in which an information browser verifies authenticity of original data generated by an information generator of the first embodiment of the authentication system;
Fig. 4 is a diagram showing in detail processing of an information generator of Fig. 3;
Fig. 5 is a diagram showing in detail processing of an information browser of Fig. 3;
Fig. 6 is a flowchart for explaining an operation in which an information authenticator guarantees authenticity of original data generated by an information generator and an information browser verifies the authenticity in the first embodiment of the authentication system;
Fig. 7 is a diagram showing an example of a method to combine a generator mark with original data;
Fig. 8 is a diagram showing another example of a method to combine a generator mark with original data;
Fig. 9 is a diagram showing an example of a method of displaying original data, image data, and a verification result;
Fig. 10 is a diagram showing another example of a method of displaying original data, image data, and a verification result;
Fig. 11 is a flowchart showing an example of a processing flow of an authenticity guaranteeing program when original data and a generator mark combined with each other into generator signature data; and
Fig. 12 is a flowchart showing an example of a processing flow of the authenticity guaranteeing program when original data and a generator mark are separated from generator signature data.

### DESCRIPTION OF THE PREFERRED EMBODIMENTS

Next, description will be given of embodiments of the present invention by referring to the drawings. Incidentally, in the drawings described below, the same reference numerals indicates the similar parts or elements. However, the present invention is not restricted by the embodiments.

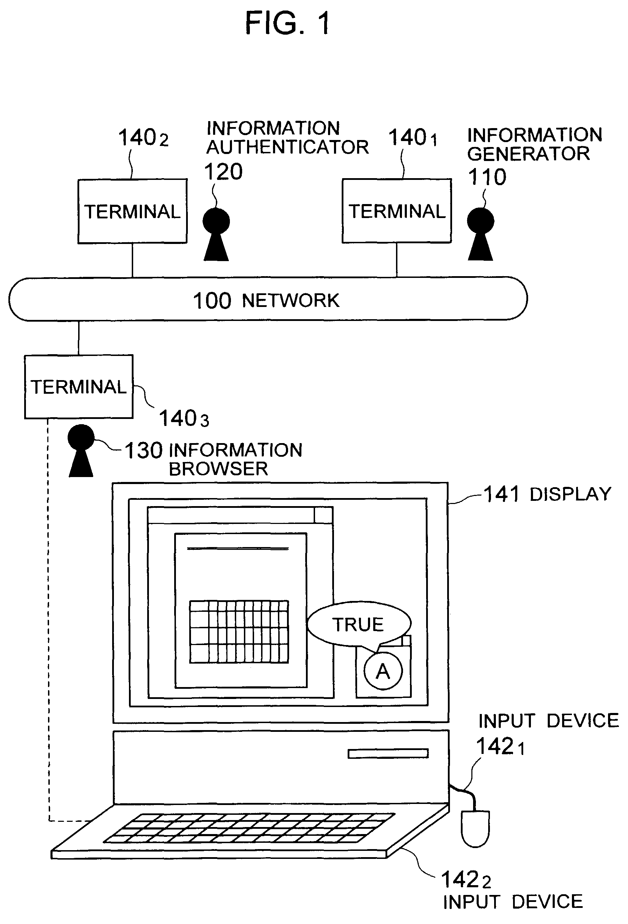

Fig. 1 is a diagram showing an outline of constitution of an authentication system to which a first embodiment of the present invention is applied. The authentication system of this embodiment is a system used by an information generator 110 for generating various kinds of multimedia data (the first multimedia data which will be simply referred to as original data herebelow), an information authenticator 120 for issuing multimedia data to guarantee authenticity of the original data (the second multimedia data generated by information authenticator 110; to be simply referred to as an authenticator mark herebelow), and an information browser 130 to browse he original data generated by information generator 110. As can be seen from Fig. 1, the configuration includes terminals 140₁ to 140₃ (to be simply referred to also as terminal 140 herebelow) mutually connected via a communication network 100 to each other.

Terminal 140₁ is a terminal used by information generator 110. Using terminal 140₁, information generator 110 generates original data, multimedia data to guarantee authenticity of the original data (the second multimedia data generated by information generator 110, to be simply referred to as a generator mark herebelow), and the third multimedia data (to be simply referred to as generator signature data herebelow) using the original data and the generator mark. Furthermore, information generator 110 communicates data via network 100 with information authenticator 120 and information browser 130.

In this connection, in the implementation of the contents of the present specification, the data format of the generator is not limited, namely, it is only required that humans can watch the format and data can be buried in the format. Specifically, the data formats such as the BMP format and the joint photographic experts group (JPEG) format can be employed. Moreover, there may be employed a data format of a still picture, a data format of a mobile picture, or a data format in which a plurality of still pictures are alternately and sequentially are displayed.

Terminal 140₂ is a terminal used by information authenticator 120. Using terminal 140₂, information authenticator 120 generates an authenticator mark for the original data generated by information generator 110 and the third multimedia data (to be simply referred to as authenticator signature data herebelow) using the original data and the authenticator mark. Moreover. information authenticator 120 also communicates data via network 100 with information generator 110. A method to generate the third multimedia data using the original data and the authenticator mark will be described later.

Terminal 140₃ is a terminal used by information browser 130. Terminal 140₃ includes a display 141 to display document data and image data to information browser 130 and input devices 142₁ and 142₂ (to be simply referred to also as input device 142 herebelow) from which information browser 130 inputs data and instructions. Using terminal 140₃, information browser 130 separates a generator mark (or an authenticator mark) and original data from the generator signature data (or the authenticator signature data), verifies the generator mark (or the authenticator mark), and browses the original data. Additionally, information browser 130 communicates data via network 100 with information generator 110. A method to separate the generator signature data (or the authenticator signature data) into a generator mark (or an authenticator mark) and original data will be described later.

Subsequently, description will be given in detail of terminal 140 of the authentication system of the present embodiment by referring to the drawings.

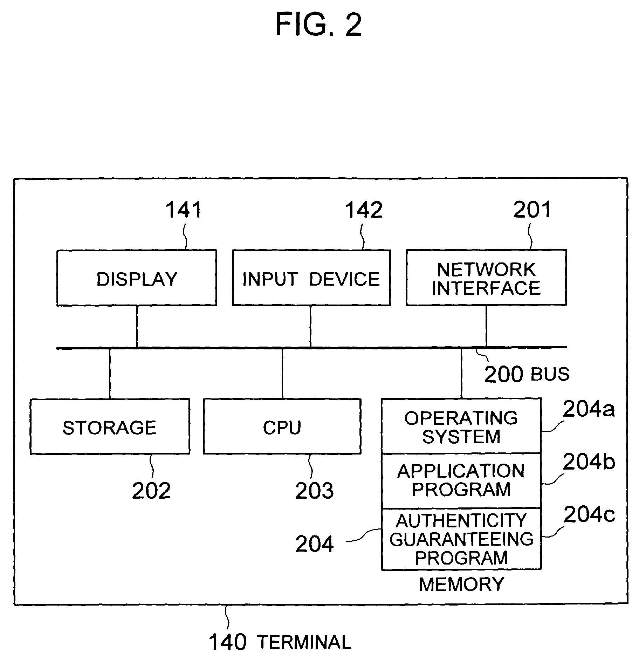

Fig. 2 shows in a block diagram a hardware configuration of terminal 140.

The hardware configuration of terminal 140 of this embodiment includes a display 141, an input device 142, a communication network interface 201, a storage 202, a central processing unit (CPU) 203, and a temporary storage (memory) 204 which are mutually connected via a bus 200 to each other as shown in Fig. 2.

Display 141 is used to display various kinds of data to information generator 110, information authenticator 120, or information browser 130 (which are collectively and simply called also as a user) using terminals 140 and includes a CRT, a liquid-crystal display, and the like.

Input device 142 is used by users utilizing terminals 140 to input data and instructions and includes a keyboard, a mouse, etc.

Communication network interface 201 is an interface to communicate data via network 100 with other terminals.

Storage 202 is used to perpetually store therein programs and data used by terminals 140 and includes a hard disk, a floppy disk, and the like.

CPU 203 achieves overall control operations of respective constituent components and executes various operations and processing.

In memory 204, there are temporarily stored such programs necessary for CPU 203 to execute the processing as an operating system 204a (to be simply referred to also as 204a herebelow), an application program 204b, and an authenticity guaranteeing program 204c.

Operating system 204a is a program to implement functions such as file management, process management, and device management to conducts overall control operations of terminals 140.

Application program 204b is a group of programs to generate original data, to browse the original data, and to communicate the data via network 100 with other terminals.

Authenticity guaranteeing program 204c is a program to generate a generator mark (or an authenticator mark), to generate generator signature data (or authenticator signature data) using a generator mark (or an authenticator mark) and the original data, and to verify the generator mark (or the authenticator mark) to display a result of the verification. That is, information generator 110 generates a generator mark and generator signature data using authentication guaranteeing program 204c. Additionally, information authenticator 120 generates an authenticator mark and authenticator signature data using authentication guaranteeing program 204c. Moreover, using authentication guaranteeing program 204c, information browser 130 separates the generator mark (authenticator mark) from the generator signature data (authenticator signature data) and verifies authenticity of the original data by use of the generator mark (authenticator mark) to display a result of the verification.

It is not necessarily required that application program 204a and authenticity guaranteeing program 204c operating on terminal 140₁ or 140₃ execute all processing above. It is only necessary that they can handle the same multimedia data and can execute processing required for the respective terminals. Moreover, terminals 140₁ and 140₃ need not be identical to each other, and each terminal need only have a function required for the terminal.

Additionally, in the following description, the operations respective of the application programs and authenticity guaranteeing program 204c are performed under control of the operating system in some cases.

Next, description will be given of operation of the embodiment of the authentication system.

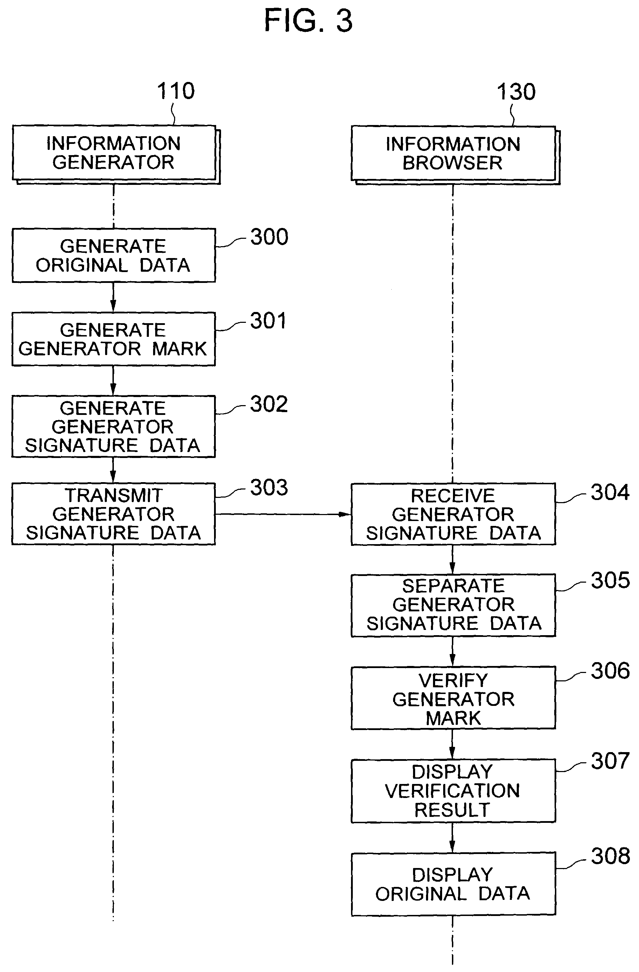

Fig. 3 shows in a flowchart operations of information generator 110 and information browser 130 in a case in which authenticity of original data generated by information generator 110 is verified by information browser 130 using generator signature data.

In Fig. 3, terminal 140₁ is used for the processing executed by information generator 110 and terminal 140₃ is used for the processing executed by information browser 130.

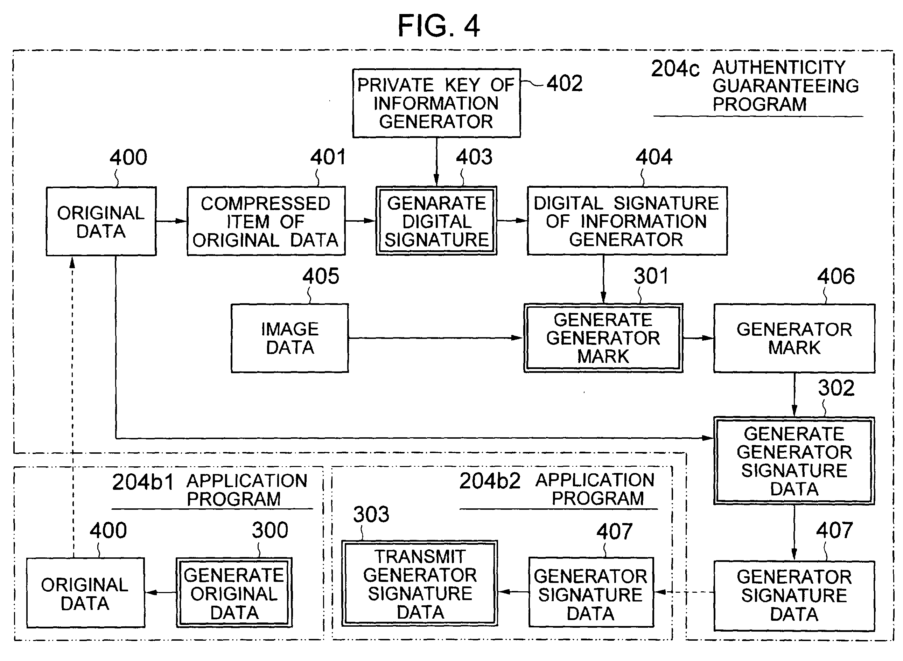

First, information generator 110 generates original data to be sent to information browser 130 (step 300). Information generator 110 then generates a generator mark to guarantee authenticity of the original data (step 301) and then generator signature data using the original data and the generator mark (step 302). Information generator 110 thereafter sends the generator signature data to information browser 130 (step 303). Details of the processing of information generator 110 will be described later by referring to Fig. 4.

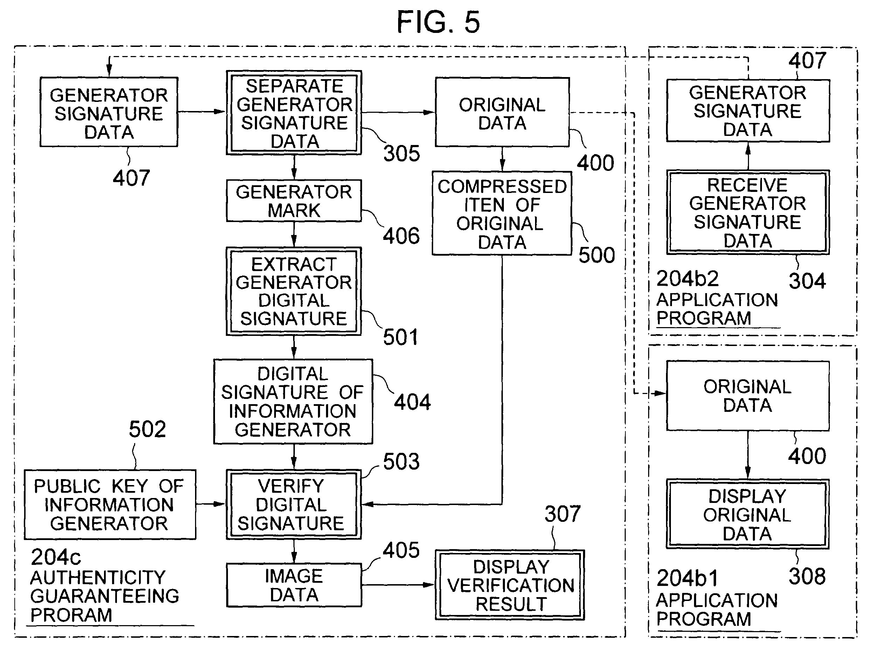

Information browser 130 having received the generator signature data (step 304) first separates the original data and the generator mark from the generator signature data (step 305) and then verifies whether or not the generator mark is actually generated by information generator 110 (step 306). Information browser 130 then confirms a result of the verification (step 307) and confirms the original data (step 308), thereby completing all processing. Details of the processing of information browser 130 will be described later by referring to Fig. 5.

In the procedure, information browser 130 confirms authenticity as follows. For example, a message "True", "False" or "Other than the generator mark" is displayed on display 141 as shown in Fig. 1, and information browser 130 watches the message. However, the present invention itself is not restricted by the display method above, namely, another display method may be employed. For example, a message box or a dialog box may be used for the display. Moreover, sound may be utilized, and sound may be used in combination with the display.

Additionally, in the operation in which information generator 110 sends generator signature data to information browser 130 in the procedure, transmitting means is not limited in accordance with the present invention. There may be used an online operation (e.g., by electronic mail) or an offline operation (e.g., by sending a floppy disk by mail). Furthermore, it may also be possible, for example, that generator signature data opened by information generator 110 by use of a Web server is acquired by information browser 130 by use of a browser program when necessary.

Fig. 4 shows in a flowchart details of processing on the side of information generator 110 of Fig. 3.

In Fig. 4, a rectangle and a double-rectangle respectively represent data and program processing.

Processing on the side of information generator 110 is achieved through cooperation of an application program (multimedia data processing program) 204b1 to generate original data 400, an authenticity guaranteeing program 204c to generate generator signature data 407 for original data 400, and an application program (communication program) 240b2 to pass generator signature data 407 to the information browser. As can be seen from Fig. 4, application programs 204b1 and 204b2 and authenticity guaranteeing program 204c are programs having mutually different functions in this embodiment. However, the present invention itself is not limited to this embodiment. For example, application programs 204b1 and 204b2 may be one program. Additionally, authenticity guaranteeing program 204c may be an add-in (plug-in) program or a macroprogram of application program 204b1.

Application program 204b1 first passes original data 400 generated (in the generation of original data of step 300) to authenticity guaranteeing program 204c. As a method to pass original data 400 between two programs, there may be considered a method in which application program 204b1 writes original data 400 as a file in a storage and then authenticity guaranteeing program 204c reads it from the storage. However, the present invention itself is not limited to this embodiment, and the data may be passed through a memory. Subsequently, authenticity guaranteeing program

204c compresses original data 400 by a predetermined compressing function to generate a compressed item 401 and executes digital signature processing 403 for compressed item 401 with a private key 402 of information generator 110 to generate a digital signature 404 of information generator 110 for original data 400. The procedure, i.e., a method in which a digital signature is not directly put to original data 400 but is put to its compressed item 401 is generally employed to minimize the time required for the digital signature processing. However, the present invention itself is not limited to this embodiment, and the digital signature may be directly put to original data.

In this regard, the compressing function may be an irreversible function such as a hash function or may be a reversible function.

Subsequently, authenticity guaranteeing program 204c generates a generator mark 406 using digital signature of information generator 110 and image data 405 (in the generation of generator mark of step 301). Image data 405 is to be displayed on display 141 of information browser 130 when a result of verification is displayed and may be a logo mark, a print of a seal, or the like. In this connection, image data 405 is separately generated by an application program capable of processing image data. As a method of combining digital signature 404 with image data 405, there may be used, for example, an electronic watermark technology described in pages 313 to 336 of "IBM Systems Journal", Vol. 35, Nos. 3 and 4, 1996. The watermark is a technology to embed information in image data by slightly changing the image data. When the watermark is used as means to combine digital signature 404 with image data 405 in the present invention, the image data itself may be slightly deformed only if visibility of image data (information obtained when a human watches the image data) is not hindered. However, the present invention itself is not limited to this method, namely, there may be employed another method, for example, a relational method such as a hyperlink.

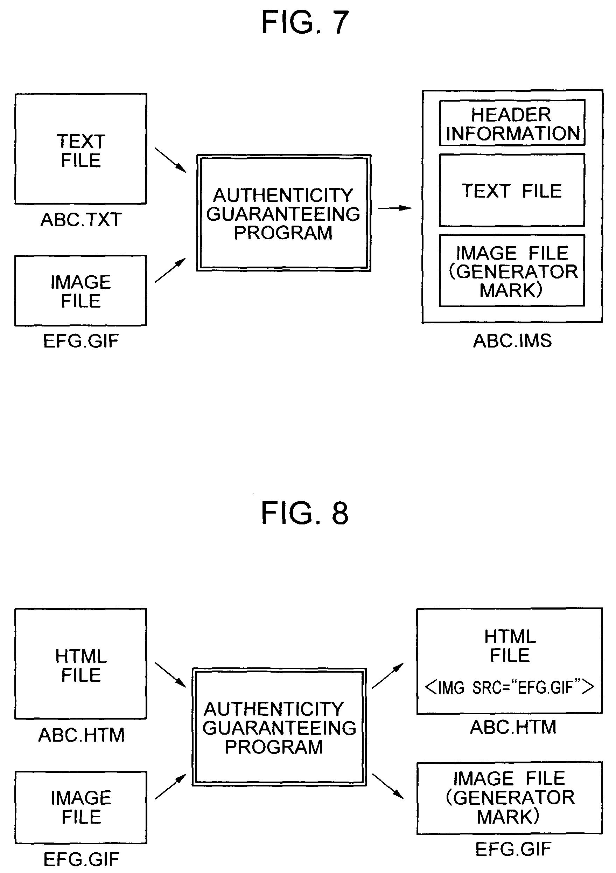

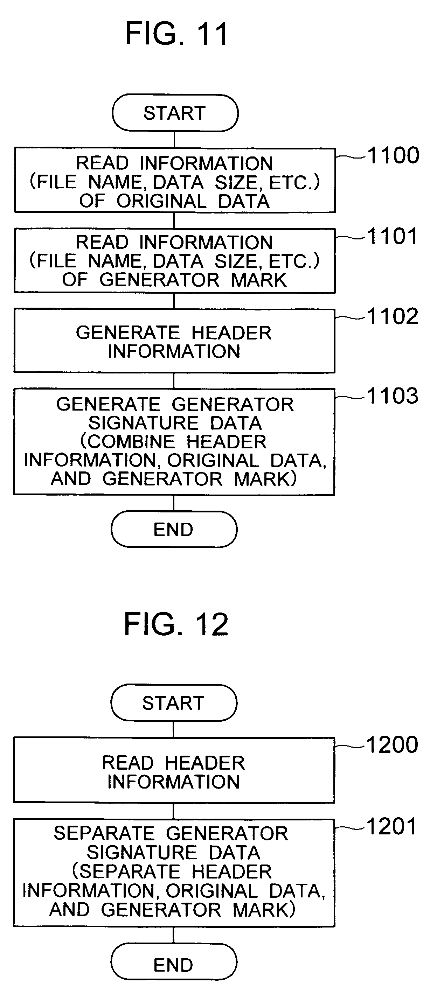

Next, authenticity guaranteeing program 204c generates generator signature data 407 using generator mark 406 and original data 400 (in the generation of generator signature data of step 302). To generate generator signature data 407, there is, for example, a method in which two multimedia data items are simply combined with each other by adding header information thereto, resultant data is transformed into a format of generator signature data, and a field of a data name, i.e., an extension code is converted as shown in Fig. 7. The header information is attribute information generated by authenticity guaranteeing program 204c and includes a data size, an original file name, and the like of each data necessary to correctly separate each data. Fig. 11 shows a flow of processing used by authenticity guaranteeing program 204c to generate generator signature data 407 in accordance with Fig. 7.

In Fig. 11, authenticity guaranteeing program 204c first checks information concerning the original data and the generator mark (steps 1100 and 1101) to generate header information according to the information (step 1102). Program 204c then combines the header information, the original data, and the generator mark to generate generator signature data (step 1103). In the procedure, the three data items are combined, for example, in a method in which a first point of the original data is concatenated to a last end of the header information and then a first point of the generator mark is linked with a last point of the original data.

In addition, when generator mark 406 is combined with original data 400, there may be used, in place of the operation to convert the data into the format of generator signature data to generate one data item as shown in Fig. 7, an operation in which link information such as a tag is employed to simply relate the original data to the generator mark. However, the present invention itself is not limited to the two methods above, and there may also be used another method.

Referring again to Fig. 4, description will be given in detail of the processing on the side of information generator 110.

After having generated generator signature data 407 as above, authentication guaranteeing program 204c passes generator signature data 407 to application program 204b2. To pass generator signature data 407 between two programs, there may be considered a method in which application program 204c writes generator signature data 407 as a file in a storage and then application program 204b2 reads the data from the storage. However, the present invention itself is not limited to the method above, and there may be used a memory to pass the data. Naturally, application program 204c may return generator signature data 407 to application program 204b1.

Finally, application program 204b2 sends generator signature data 407 to information browser 130 (in the transmission of generator signature data of step 303).

Fig. 5 shows in a schematic diagram details of the processing on the side of information browser 130 of Fig. 3.

In Fig. 5, a rectangle and a double-rectangle respectively represent data and program processing.

The processing on the side of information browser 130 is conducted through cooperation of an application program (communication program) 204b2 to receive generator signature data 407, authenticity guaranteeing program 204c to verify authenticity of original data 400 using generator signature data 407, and an application program (multimedia data processing program) 204b1 to display original data 400. As can be seen from Fig. 5, application programs 204b1 and 204b2 and authenticity guaranteeing program 204c are separately described as programs having mutually different functions in this embodiment. However, the present invention itself is not limited to the configuration above. For example, application programs 204b1 and 204b2 may be one program. In addition, authenticity guaranteeing program 204c may be an add-in (plug-in) program or a macroprogram of application program 204b1.

Application program 204b2 first receives generator signature data 407 (in the reception of generator signature data of step 304) and then passes generator signature data to authenticity guaranteeing program 204c. To pass generator signature data 407 between two programs, there may be considered a method in which application program 204b2 writes generator signature data 407 as a file in a storage and then application program 204c reads the data from the storage. However, the present invention itself is not limited to the method above, and there may be used a memory to pass the data.

Incidentally, when generator signature data 407 is combined into one data item in the method shown in Fig. 7 in the processing procedure above, application program 204b2 (information browser 130) can determine that the data is generator signature data 407 by checking an extension code of the data name received. On the other hand, when generator signature data 407 is related by a tag or the like as shown in Fig. 8, application program 204b2 (information browser 130) cannot immediately determine whether or not the received data is generator signature data 407. However, also in the latter case, if application program 204b2 always verifies the received image file using authenticity guaranteeing program 204c, it is possible by watching a result of data authenticity verification whether or not the pertinent data is generator signature data 407. If the data is not generator signature data 407 but merely a mark, it may also possible to explicitly indicate that the data is not guaranteed at all.

Additionally, the tag added to image data in an HTML file shown in Fig. 8 may be an exclusive tag to indicate that the image data is generator signature data 407. In such a case, however, application program 204b2 is required to be beforehand set such that when image data with an exclusive tag is received, application program 204b2 passes the image data to authenticity guaranteeing program 204c for the pertinent processing.

Subsequently, authentication guaranteeing program 204c separate original data 400 and generator mark 406 from generator signature data 407 (in the separation of generator signature data of 305) and compresses original data 400 using the predetermined compressing function to generate a compressed item 500. As the separating method, there is used a method corresponding to "generation of generator signature data 302" of Fig. 4. For example, when generator signature data 407 is generated in the method shown in Fig. 7, authentication guaranteeing program 204c executes processing shown in Fig. 12.

In Fig. 12, authentication guaranteeing program 204c first reads header information from generator signature data 407 (step 1200). In accordance with the contents of the header information, authentication guaranteeing program 204c thereafter separates header information, original data, and a generator mark from generator signature data 407 (step 1201). When any error occurs in the procedure, for example, necessary information cannot be read from the header information, the condition is notified to information browser 130 and then the processing is terminated.

On the other hand, when generator signature data 407 is generated by simply relating two data items by a tag or the like as shown in Fig. 8, the processing to separate original data 400 and generator mark 406 from the generator signature data 407 is not executed.

Referring again to Fig. 5, description will be given in detail of the processing on the side of information browser 130.

Authentication guaranteeing program 204c then extracts digital signature 404 of information generator 110 from generator mark 406 (in the extraction of a generator digital signature of step 501) and verifies whether or not digital signature 404 is actually generated by information generator 101 using compressed item 500 and a public key 502 of information generator 110 (digital signature verification 503). To correctly execute the processing, information browser 130 beforehand acquires public key 502 of information generator 110 or acquires public key 502 at this point of time. As the acquiring method, there may be considered a method in which information browser 130 beforehand meets information generator 110 to directly acquire public key 502. However, the present invention is not limited to the acquiring method. There may be employed, for example, a certification authority and a certificate described in pages 193 to 261 of "Secure Electronic Commerce" written by Warwick Ford and Michael S. Baum and published from Prentice Hall PTR. In other words, since the electronic certificate includes a public key, the public key can be obtained when the electronic certificate is attained.

The electronic certificate can be acquired as follows. Information browser 130 directly obtains the electronic certificates of information generator 110 from the certification authority. Another method may be used. Namely, when generator mark 406 is generated in Fig. 4, digital signature, image data 405, and the electronic certificate of information generator 110 are combined with each other. Under this condition, when authenticity guaranteeing program 204c extracts digital signature 404 of information generator 110 from generator mark 406, the electronic certificate of information generator 110 is also extracted.

Next, authentication guaranteeing program 204c displays a result of the verification on display 141 (in the verification result display of step 307). The display includes image data 405 specified by information generator 110 and a result of the verification and is, for example, as shown in Fig. 1. That is, when digital signature 140 can be correctly verified in the verification, it is displayed that original data 400 is correct. On the other hand, when digital signature 140 cannot be correctly verified, it is displayed that original data is not correct. Furthermore, when generator mark 406 does not include digital signature 404 and hence the verification processing cannot be executed, the condition is displayed. By watching these displayed items, information browser 130 can determine whether or not original data 400 is correct.

Subsequently, authentication guaranteeing program 204c passes original data 400 to application program 204b1. To pass original data 400 between two programs, there may be considered a method in which authentication guaranteeing program 204c writes original data 400 as a file in a storage and then application program 204b1 reads the data from the storage. However, the present invention itself is not limited to the method above, and there may be used a memory to pass the data.

Application program 204b1 finally displays original data on display 141 (in the original data display of step 308). For the display, it will be convenient to automatically conduct the display such that authentication guaranteeing program 204c confirms an application program to be initiated in accordance with a file name (an extension code) of original data 400, passes original data 400 to application program 204b1, and then initiates application program 204b1.

However, the procedure above does not restrict the processing sequence of steps 307 and 308.

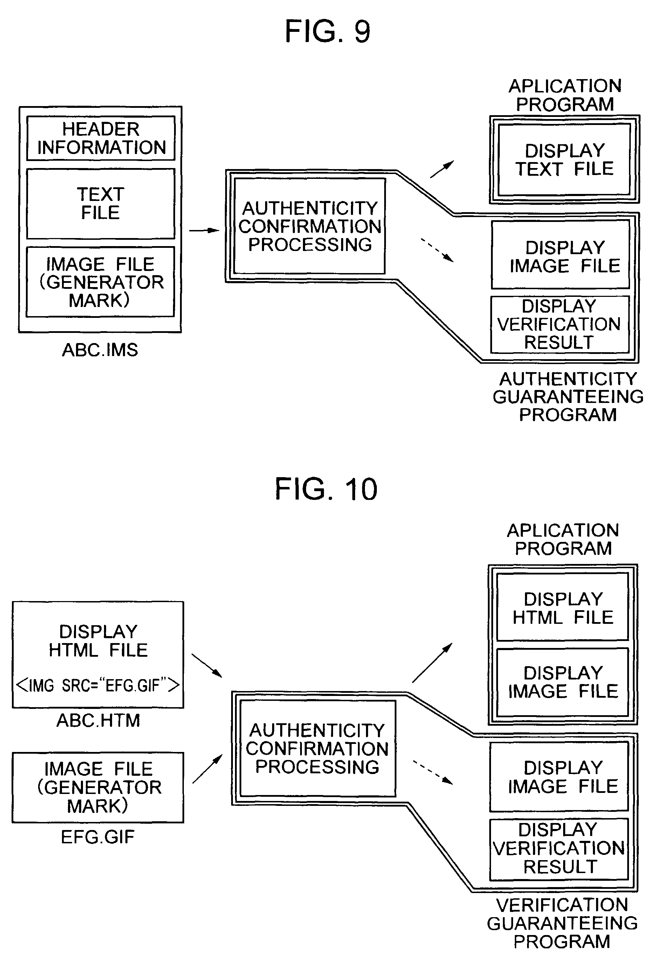

Additionally, in the procedure above, the display processing of original data and that of image data (including the verification result) are separately achieved by the application program and the authenticity guaranteeing program as shown in Fig. 9. However, the present invention is not limited to the method above. When the application program can also display image data, the original data and the image data may be displayed by the application program as shown in Fig. 10. In this case, authentication guaranteeing program 204c passes not only the original data but also the image data to the application program. However, even when the application program displays image data, the authentication guaranteeing program displays the image data and the verification result.

In the embodiment above, information generator 110 generates, for original data 400 generated by an arbitrary application program, digital signature 404 guaranteeing authenticity of original data 400, combines digital signature 404 with image data 405, and then generates generator mark 406 for the combined data. Thereafter, generator mark 406 and original data 400 are combined with each other to be passed to information browser 130.

In addition, by using digital signature 404 of information generator 110 included in the generator mark 406 received, information browser 130 verifies authenticity of original data 400 received at the same time. Furthermore, the verification result can be notified visually and auditorily to information browser 130.

Consequently, in accordance with the present invention, when a dishonest person forgets original data 400 or attaches generator mark 406 to another information, an error results from the verification processing of digital signature 404, and the error is visually and auditorily notified to information browser 130. As a result, information browser 130 can correctly confirm whether or not original data 400 is correct.

Subsequently, description will be given of an authentication system to which another embodiment of the present invention is applied.

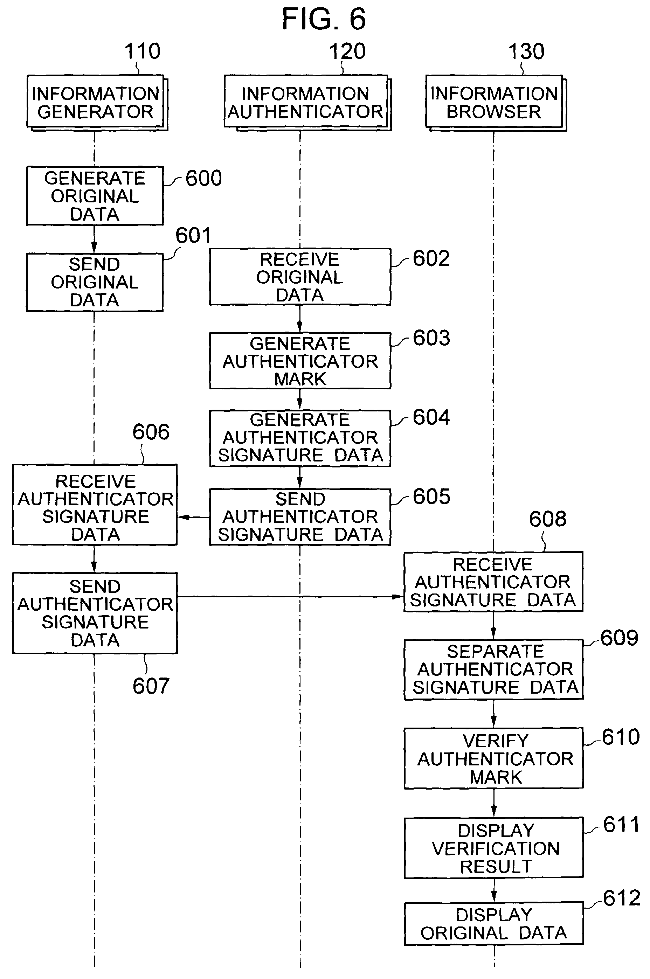

Fig. 6 shows in a flowchart operations of information generator 110, information authenticator 120, and information browser 130 in a case in which information authenticator 120 generates, for original data generated by information generator 110, authenticator signature data guaranteeing authenticity of the original data and information browser 130 verifies authenticity of the original data using the authenticator signature data.

In Fig. 6, terminal 140₁ is used for the processing executed by information generator 110 and terminal 140₂ is used for the processing executed by information authenticator 120. Moreover, terminal 140₃ is used for the processing executed by information browser 130.

First, information generator 110 generates by an application program original data to be sent to information browser 130 (step 600). Thereafter, original data is sent to information authenticator 120 (step 601).

Information authenticator 120 having received the original data (step 602) generates an authenticator mark guaranteeing authenticity of the original data (step 603) and then generates authenticator signature data using the original data and the authenticator mark (step 604). Thereafter, the authenticator signature data is returned to information generator 110 (step 605).

Information generator 110 sends the authenticator signature data returned from information authenticator 120 (step 606) to information browser 130 (step 607).

Having received the authenticator signature data (step 608), information browser 130 separates the original data and the authenticator mark from the authenticator signature data (step 609) and verifies whether or not the authenticator mark is actually generated by information authenticator 120 (step 610). Information browser 130 then confirms the verification result (step 611), confirms the original data by an appropriate application program (step 612), and then terminates the entire processing.

In the procedure above, the authenticator mark generation processing (step 603) and the processing to generate authenticator signature data (step 604) are basically the same as the generator mark generation processing (step 301) and the processing to generate generator signature data (step 302) shown in Fig. 4. In addition, the processing to separate authenticator signature data (step 609), the processing to verify the authenticator mark (step 610), and the processing to confirm the verification result and the original data (steps 611 and 612) are basically same as the processing to separate generator signature data (step 305), the processing to verify the generator mark (step 306), and the processing to confirm the verification result and the original data (steps 307 and 308) shown in Fig. 5. Furthermore, steps 600, 607, and 608 of Fig. 6 respectively correspond to steps 300, 303, and 304 of Fig. 3.

Additionally, although the original data is sent from information generator 110 to information authenticator 120 in the procedure above, it may also be possible that the compressed item of the original data is generated on the side of information generator to send the compressed item to the information authenticator. In this case, it is possible that the contents of the original data is not known to the information authenticator.

In the embodiment above, information authenticator 120 generates a digital signature guaranteeing authenticity of the original data generated by information generator 110 using an arbitrary application program and then combines the signature with the image data to generate an authenticator mark. Thereafter, information authenticator 120 combines the authenticator mark with the original data to send the resultant data to information generator 110.

Additionally, information generator 110 passes the authenticator mark and the original data returned from information authenticator 120 to information browser 130.

Moreover, by use of the digital signature of information authenticator included in the authenticator mark received, information browser 130 verifies authenticity of the original data simultaneously received. In addition, the verification result is visually and auditorily notified to information browser 130.

Consequently, in accordance with the present invention, when a dishonest person forgets the original data or attaches the generator mark to another information, an error results from the verification processing of digital signature 404, and the error is visually and auditorily notified to information browser 130. As a result, information browser 130 can correctly confirm whether or not original data 400 is correct.

In this connection, the present invention is not limited to the respective embodiments above, namely, various variations are possible within the scope of the invention.

For example, although the original data is displayed regardless of the verification result in the present invention, this does not restrict the present invention. It may also be possible that only when authenticity of the original data is confirmed as a result of the verification, the original data is displayed using an appropriate application program. In this case, the processing of step 308 is controlled according to a result of step 307 in Fig. 5.

Moreover, in the description of the present invention, when generator signature data is received, the authenticity guaranteeing program automatically conduct the verification. However, the present invention is not restricted by this procedure. The verification may be conducted when the information browser explicitly issues an indication. In such a case, if the authenticity guaranteeing program displays, in place of the generator mark, unique image data to indicate presence of a generator mark awaiting the verification, it is quite convenient because the condition can be easily understood by the information browser.

Additionally, in the description of the respective embodiments above, the image data and the digital signature are combined with each other. However, it is to be appreciated that the present invention is also applicable to multimedia data of character data, image data, video data, audio data, and combinations thereof.

In addition, the original data (or the compressed item of the original data) is the object of the digital signature in the respective embodiments above, which however does not restrict the present invention. It may also be possible that there is generated attribute information, for example, a term of validity of the original data and discrimination of an original document or a certified copy such that the attribute information and the original data are used as the object of the digital signature. For example, in a case in which original data is valid only during a period of time and becomes invalid when the period is expired, it may also be possible that generator signature data (authenticator signature data) is generated using the original data, the generator mark (authenticator mark) and the expiration date such that the expiration date is also transmitted when a result of the verification is passed to the information browser. In addition, it may also be possible that the storage location of the original (either a physical location, e.g., an address or a logical location, e.g., an URL) is specified as one of the generating elements of the generator signature data (authenticator signature data). In the verification, whether the browse data is the original or the copy is determined using information of the storage location such that a result of the determination is also transmitted when a result of the verification is passed to the information browser.

Furthermore, access control information for the original data may be included in the attribute information. In such a case, the authenticity guaranteeing program checks the access control information to determine whether the information browser is authorized to access the original data. If this is the case, the original data is returned to the pertinent application program. In this case, it may also be possible that the original data is encrypted on the information generator side and the data is decrypted when the information browser is authorized to access the original data.

In the description of the present invention, the authenticity verification is accomplished by the terminal of the information browser. However, the present invention is not restricted by the procedure. For example, when information (generator signature data) opened by an information generator on an open network such as the Internet is viewed by an information browser in a domain (e.g., a firm or a school) managed according to a policy, authenticity may be verified by a gateway apparatus such as a firewall installed between a intra-domain network of the domain and the Internet. In this case, moreover, safety and practicability will be increased if only information of which authenticity is confirmed is transmitted onto the intra-domain network and only information to which a particular mark is added is sent to the intra-domain network.

In addition, each program stored in the terminals of the embodiments above operates under an operating system controlling the terminal associated therewith and communicates data and commands via the operating system with respective hardware constituent elements of the terminal. It is naturally possible that the program conducts communication of data and commands with such hardware elements without any intervention of the operating system.

Furthermore, when these programs are stored in the respective terminals, these programs are in a form in which the programs are stored on a floppy disk, a compact disk read-only memory (CD-ROM), a digital video disk (DVD), or any one of various storage media or these programs are down-loaded to the respective terminals from another terminal connected to a network to which the respective terminals are connected.

Moreover, although data passing communication network 100 is not encrypted in the present invention, encrypted data may be separately communication to guarantee security of information.

As described above, in accordance with the present invention, authenticity of multimedia data generated by the first user can be correctly confirmed visually and auditorily by the second user.

As described above, in accordance with the present invention, whether or not multimedia data generated by a first user can be visually and auditorily confirmed by a second user in a direct manner independently of the format of the multimedia data and the application program to process the multimedia data. This consequently makes it possible to guarantee security of the system.

While the present invention has been described in detail and pictorially in the accompanying drawings, it is not limited to such details since many changes and modifications recognizable to those of ordinary skill in the art may be made to the invention without departing from the spirit and the scope thereof.

## Claims

1. An information authentication system, comprising an information generating terminal (140₁) and an information browsing terminal (140₃) which are mutually connected via a communication network (100), wherein
the information generating terminal includes:
means (204c) for generating first multimedia data (400) to be sent to the information browsing terminal;
means (204c) for generating second multimedia data (406) guaranteeing authenticity of the first multimedia data; and
means (204c) for generating third multimedia data (407) using the first and second multimedia data and transmitting the third multimedia data to the information browsing terminal; and
the information browsing terminal includes:
means (204b2) for receiving the third multimedia data sent from the information generating terminal and separating the first multimedia data and the second multimedia data from the third multimedia data;
means (204c) for verifying authenticity of the first multimedia data by use of the second multimedia data;
and means (204c) for enabling the first multimedia data to be browsed.

2. An information authentication system, comprising an information generating terminal (140₁), an information browsing terminal (140₃), and a gateway apparatus which are mutually connected via a communication network (100), wherein
the information generating terminal includes:
means (204c) for generating first multimedia data (400) to be sent to the information browsing terminal;
means (204c) for generating second multimedia data (406) guaranteeing authenticity of the first multimedia data; and
means (204c) for generating third multimedia data (407) using the first and second multimedia data and transmitting the third multimedia data via the gateway apparatus to the information browsing terminal;
the gateway apparatus include:
means for receiving the third multimedia data sent from the information generating terminal and separating the first multimedia data and the second multimedia data from the third multimedia data;
means for verifying authenticity of the first multimedia data by use of the second multimedia data; and
means for transmitting the first multimedia data, the second multimedia data, and a result of the authenticity verification processing to the information browsing terminal; and
the information browsing terminal includes means for receiving the first multimedia data, the second multimedia data, and a result of the authenticity verification processing sent from the gateway apparatus and enabling the three types of data received to be browsed.

3. An information authentication system, comprising an information generating terminal (140₁), an information authenticating terminal (140₂) and an information browsing terminal (140₃) which are mutually connected via a communication network (100), wherein
the information generating terminal includes:
means (204b1) for generating first multimedia data (400);
means (204b1) for sending the first multimedia data to the information authenticating terminal; and
means (204c) for receiving third multimedia data sent from the information authenticating terminal and sending the third multimedia data to the information browsing terminal;
the information authenticating terminal includes:
means (204c) for receiving the first multimedia data from the information generating terminal and generating second multimedia data (406) guaranteeing authenticity of the first multimedia data; and
means (204c) for generating the third multimedia data using the first and second multimedia data and returning the third multimedia data to the information generating terminal; and
the information browsing terminal includes:
means (204b2) for receiving the third multimedia data sent from the information generating terminal and separating the first multimedia data and the second multimedia data from the third multimedia data;
means (204c) for verifying authenticity of the first multimedia data by use of the second multimedia data; and
means (204b1) for browsing the first multimedia data.

4. An information authentication system, comprising an information generating terminal (140₁), an information authenticating terminal (140₂), an information browsing terminal (140₃), and a gateway apparatus which are mutually connected via a communication network (100), wherein
the information generating terminal includes:
means (204b1) for generating first multimedia data (400);
means (204b1) for sending the first multimedia data to the information authenticating terminal; and
means (204c) for receiving third multimedia data sent from the information authenticating terminal and sending the third multimedia data via the gateway apparatus to the information browsing terminal;
the information authenticating terminal includes:
means (204c) for receiving the first multimedia data from the information generating terminal and generating second multimedia data (406) guaranteeing authenticity of the first multimedia data; and
means (204c) for generating third multimedia data using the first and second multimedia data and returning the third multimedia data to the information generating terminal; and
the gateway terminal includes:
means (204b2) for receiving the third multimedia data sent from the information generating terminal and separating the first multimedia data and the second multimedia data from the third multimedia data;
means (204c) for verifying authenticity of the first multimedia data by use of the second multimedia data; and
means (204c) for transmitting the first multimedia data, the second multimedia data, and a result of the authenticity verification processing to the information browsing terminal; and
the information browsing terminal includes means (204c) for receiving the first multimedia data, the second multimedia data, and the result of the authenticity verification processing from the gateway apparatus and enabling the three kinds of data to be browsed.

5. An information authentication system in accordance with any of Claims 1 to 4, wherein the means for verifying authenticity of the first multimedia data by use of the second multimedia data conducts the authenticity verification by use of evidence data (406, 500) being included at generation of the second multimedia data and guaranteeing authenticity of the first multimedia data.

6. An information authentication system in accordance with any of Claims 1 to 5, wherein the second multimedia data guaranteeing authenticity of the first multimedia data includes a digital signature (404) put to the first multimedia data or a compressed item thereof.

7. An information authentication system in accordance with Claim 6, wherein the second multimedia data guaranteeing authenticity of the first multimedia data further includes a public key or an electronic certificate for use in verification of the digital signature (Fig. 5).

8. An information authentication system in accordance with any of Claims 1 to 7, wherein the means for verifying authenticity of the first multimedia data by use of the second multimedia data can be visually or auditorily confirmed.

9. An information authentication system in accordance with any of Claims 1 to 8, wherein the first multimedia data is enabled to be browsed when authenticity of the first multimedia data is confirmed by use of the second multimedia data.

10. An information authentication system in accordance with claim 3, wherein the data sent from the information generating terminal to the information authenticating terminal is a compressed item (500) of the first multimedia data.

11. An information authentication system in accordance with Claim 6, wherein when the second multimedia data is generated, attribute information related to the first multimedia data is also an object of the digital signature.

12. An information authentication system in accordance with Claim 11, wherein:
the attribute information includes access control information of the first multimedia data; and
whether or not the first multimedia data is to be browsed is determined using the access control information.

13. An authenticity guaranteeing program (204c), comprising:
means (301, 302), responsive to reception of an indication to generate authenticity guarantee data, for generating second multimedia data guaranteeing authenticity of the first multimedia data and thereafter generating third multimedia data using the first and second multimedia data; or
means (305, 307), responsive to reception of an indication to verify authenticity guarantee data, for separating the first multimedia data and the second multimedia data from the third multimedia data received and thereafter verifying authenticity of the first multimedia data by use of means for verifying authenticity of the second multimedia data and outputting a result of the verification in a method in which the result can be visually or auditorily confirmed.

14. An authenticity guaranteeing program in accordance with Claim 13, wherein:
the third multimedia data is generated by generating header information in accordance with information related to the first and second multimedia data and then combining the header information with the first and second multimedia data (Fig. 11); and
the third multimedia data is separated by extracting the first and second multimedia data in accordance with the header information (Fig. 12).

15. An authenticity guaranteeing program in accordance with Claim 13, wherein:
the third multimedia data is generated by adding to the first multimedia data a tag indicating link information to the second multimedia data; and
the third multimedia data is separated by extracting the link information.

16. An authenticity guaranteeing program in accordance with any of Claims 13 to 15, wherein when an application program capable of processing the first multimedia data exists in a terminal in which the authenticity guaranteeing program operates, the first multimedia data is passed to the application program to initiates the application program.

17. An authenticity guaranteeing program in accordance with any of Claims 13 to 16, wherein the initiation of the verification of the authenticity guarantee data is indicated by reception of the third multimedia data.

18. An authenticity guaranteeing program in accordance with any of Claims 13 to 16, wherein the initiation of the verification of the authenticity guarantee data is indicated by an explicit instruction from a user.

19. Multimedia data, comprising:
first multimedia data (400) generated by an information generating terminal;
second multimedia data (406) guaranteeing authenticity of the first multimedia data; and
attribute information necessary for separating the first and second multimedia data.

20. Multimedia data in accordance with Claim 19, further including a tag indicating link information to the second multimedia data, wherein the tag explicitly indicates that the evidence data is included in the second multimedia data.
